(19) **Europäisches Patentamt**

**European Patent Office**

**Office européen des brevets**

(11) **EP 1 114 288 B1**

(12) **EUROPÄISCHE PATENTSCHRIFT**

(45) Veröffentlichungstag und Bekanntmachung des Hinweises auf die Patenterteilung:
**08.05.2002   Patentblatt 2002/19**

(51) Int Cl.[7]: **F25D 3/06**

(21) Anmeldenummer: **98954174.3**

(86) Internationale Anmeldenummer:
**PCT/DE98/02724**

(22) Anmeldetag: **14.09.1998**

(87) Internationale Veröffentlichungsnummer:
**WO 00/16027 (23.03.2000 Gazette 2000/12)**

(54) **VERFAHREN ZUM GEKÜHLTEN TRANSPORT**

COLD TRANSPORTATION METHOD

PROCEDE DE TRANSPORT FRIGORIFIQUE

(84) Benannte Vertragsstaaten:
**AT BE DE ES FR GB GR NL**

(43) Veröffentlichungstag der Anmeldung:
**11.07.2001   Patentblatt 2001/28**

(60) Teilanmeldung:
**01710055.3 / 1 186 841**

(73) Patentinhaber: **Integral Energietechnik GmbH
24941 Flensburg (DE)**

(72) Erfinder: **PAUL, Joachim
D-24937 Flensburg (DE)**

(74) Vertreter: **Biehl, Christian, Dipl.-Phys.
Boehmert & Boehmert,
Anwaltssozietät,
Niemannsweg 133
24105 Kiel (DE)**

(56) Entgegenhaltungen:
**EP-A- 0 766 051          WO-A-97/18422
WO-A-98/35193          DE-A- 19 735 584
DE-U- 29 722 052      US-A- 5 123 262**

**Beschreibung**

Die Erfindung betrifft ein Verfahren zum gekühlten Transport eines Gutes in einem hohlwandigen Container.

Gekühlter Transport, im folgenden nach seiner englischen Abkürzung für "refrigerated transport" "RT" genannt, muß insbesondere zur Beibehaltung einer sogenannten "Kühlkette" für Frisch-Produkte, wie Gemüse, Früchte, Fleisch oder andere Nahrungsmittel bereitstehen. Auch andere sensible Produkte wie Chemikalien, biologische Erzeugnisse oder Sprengstoffe müssen teilweise gekühlt transportiert werden. Gekühlter Transport (RT) umfaßt dabei Kühlung für Lastwagen, Kleintransporter, Bahnwaggons, Container, Schiffe, Boote und dergleichen.

Der Kühltransport nutzt heutzutage im wesentlichen Kompressorkühlung aus, wobei ein Kühlmittel in den Rohrleitungen eines Kühlers verdampft und Luft oder Gas (kontrollierte Atmosphäre) kühlt.

Wärme wird durch Erzeugen einer kalten Oberfläche entzogen, wobei zirkulierende Luft oder Gas kälter und - wenn einmal die Temperatur des Taupunktes erreicht ist - entfeuchtet wird.

Abhängig von der Wärmelast schaltet das Kühlgerät an oder ab oder läuft leistungsgeregelt. Solche mechanischen Kühlsysteme sind teuer und benötigen Wartung, Ersatzteile, ausgebildete Mechaniker und eine aufwendige Energieversorgung in Form von elektrischen, diesel-elektrischen oder Dieselantrieben, um die Kühlung unter allen Umständen beizubehalten.

In einigen Anwendungen wird indirekte Kühlung zum Kühlen von Luft oder Gas durch Zirkulieren eines Kälteträgers z. B. einer Salzlösung durch einen Kühler anstelle des direkten Verdampfens des Kühlmittels benutzt.

Die Produkte werden in einer gekühlten Kammer gelagert, die entweder Teil des Aufbaues eines Kraftfahrzeuges oder einer Art Container (im folgenden "RC" genannt) ist, der aufgeladen und abgeladen werden kann. Diese Container werden üblicherweise an der Außenseite isoliert, um das Eindringen von Wärme so gering wie möglich zu halten. Container enthalten Luftkühler und Einrichtungen, um Luft zu Zirkulieren, z. B. Ventilatoren.

In einigen Anwendungen, wie z. B. Verteilfahrzeugen wird die Temperatur eines Containers beibehalten oder verändert, indem sogenannte eutektische Platten benutzt werden, die üblicherweise über ein Kühlgerät oder durch Einbringen in einen Kühlraum vorgekühlt werden. Es wurde auch schon Luft durch ein Eisbett geleitet. Für spezielle Transportaufgaben, wie z. B. die Luftfracht wird $CO_2$ benutzt. Das Versprühen von $N_2$ in die Container ist ein weiterer praktikabler Weg zum Beibehalten oder Beeinflussen der Temperatur in Containern.

Es wurde zudem bereits eine Anzahl von verschiedenen Wegen vorgeschlagen, um eine Kühlung für den gekühlten Transport und Kühlcontainer zu erhalten. So wird z. B. in der deutschen Offenlegungsschrift 1 551 365 oder dem Europäischen Patent 0 664 426 der Zwischenraum einer Doppelwand eines Containers mit einer Anordnung von Röhren versehen, durch die ein Kälteträger (Sole), wie z. B. eine Salzlösung, gepumpt wird, die ein Fluid, das innerhalb des Wandzwischenraumes enthalten ist, kühlt und schließlich ausfrieren läßt. Das Ausfrieren dient dazu, latente Energie der Umwandlung (gespeicherte Kälteenergie) für eine bestimmte Zeit zur Verfügung zu stellen, wenn der Kühlcontainer von einer Kühlmaschine getrennt ist, z. B. während der Zeiten des Kühltransportes. Die Flüssigkeit, die ausgefroren werden kann, kann entweder Wasser oder eine Sole, z.B. eine Salzlösung/Eutektikum sein.

Dieses Verfahren des Standes der Technik stellt sich praktisch derart dar, daß der Kühlcontainer an ein Kühlgerät angeschlossen wird und den Kälteträger in das Röhrensystem einbringt. Der Abkühlprozeß ist langsam, da die gesamte Struktur innerhalb des Kühlcontainers zusammen mit der Flüssigkeit zuerst herabgekühlt und dann gefroren werden muß.

Einen ähnlichen Nachteil weist das Verfahren nach der DE-U1 297 22 052 auf, die einen Transportbehälter zeigt, der bei der Neubefüllung mit Binäreis nur durch nachdrängendes Binäreis an seiner Oberseite entleert werden kann, wodurch der aufsteigende kristalline Bestandteil des Eises parallel zu dem sich schon zuvor im Behälter befundenen Wasser abgeführt wird. Konsequenterweise wird auch direkt in den Eisspeicher rückgeführt.

Damit ist ein schnelles Abkühlen nicht möglich, da zunächst die erhebliche Wärmelatenz des erwärmten Alt-Wassers zusätzlich überwunden werden muß. Auch wird der Eisspeicher gerade dann, wenn er am meisten Kälte liefern soll mit erwärmten Wasser belastet, was zu einer größeren Dimensionierung des Speichers und der Kälteanlage führen muß.

Weiter ist die Verwendung unterschiedlicher Binäreisfluidzusammensetzungen so wesentlich erschwert, da stets eine Vermischung mit dem Altbinäreisfluid stattfindet. Wesentlichster Nachteil ist aber die erhöhte Verweilzeit an dem Binäreiserzeuger, die dieses System unwirtschaftlich macht.

In der deutschen Offenlegungsschrift 1 751 608 wird weiter ein Verfahren beschrieben, in dem mit Brucheis in den Wandzwischenräumen eines Kühlcontainers gekühlt wird, um so ein Mittel zur Energiespeicherung während des Kühltransportes zu haben. Dieser Vorschlag umfaßt auch einen Vorschlag bei dem ein Kühlcontainer oder die Doppelwandelemente eines Kühlcontainers ein eutektisches Fluid in einem kalten Raum vor dem Kühltransport umfaßt. Weiter ist die deutsche Offenlegungsschrift 2 251 529 zu nennen, die eine Kontaktkühleinrichtung, nämlich zum Transport von biologischen Zellen und Organen umfaßt, die durch eine Kühlmaschine vorgekühlt wird oder durch Verdampfen einer Substanz gekühlt wird und die mit einer Kältemaschine nach einer gewissen Zeit nachgekühlt wird.

Schließlich ist in der europäischen Anmeldung 0 158 378 ein Verfahren zur Kompensierung der Volumenausdehnung von frierenden und schmelzenden Substanzen in einem geschlossenen Raum, wie z. B. der Kühlcontainerdoppelwand beschrieben.

Der Erfindung liegt nun aber die Aufgabe zugrunde, ein System für den Kühltransport zu schaffen, das ohne großen apparativen Aufwand Kühlcontainer möglichst schnell auf die jeweilige dem Einsatzzweck entsprechende Temperatur kühlt, ohne daß Kühlaggregate zur Abkühlung oder während des Transportes vorzusehen oder zu betreiben sind.

Erfindungsgemäß wird dies durch ein Verfahren mit den Merkmalen des Hauptanspruches gelöst. Die Unteransprüche geben vorteilhafte Ausführungsformen der Erfindung wieder.

Die Erfindung nutzt dabei Binäreis (kurz BI), das eine Suspension winziger Eiskristalle darstellt. Binäreis wird aus einer wässrigen Lösung oder Mischung in speziellen Verdampfern durch Kühlen einer Oberfläche und Abschaben der erzeugten Eiskristalle hiervon oder von einem direkten Kontaktwärmetauscher, an dem die wässrige Lösung oder Mischung Eiskristalle in der Flüssigkeit beim Tripel-Punkt der Flüssigkeit (z.B. Wasser 0,1 °C, 6 mb) ausbildet, erzeugt.

Binäreis ist ein flüssiges pumpbares Fluid, das auch Eisbrei genannt werden kann. Aufgrund des Vorhandenseins von Eiskristallen in der Suspension enthält die Flüssigkeit latente Energie, die die Enthalpie der reinen Flüssigkeit wesentlich erhöht und das Binäreis daher zu einem hervorragenden Mittel zum Transportieren, Übertragen und Speichern von Kälteenergie macht. Im erfindungsgemäßen Verfahren kann dadurch innerhalb kürzester Zeit eine genau auf den Einsatz abgestimmte Kühlung erfolgen.

Die Erfindung macht sich dabei die einzigartigen Eigenschaften eines solchen Binäreises für den dynamischen Transport eines Kühlsystemes zunutze. Ein erfindungsgemäßer Kühlcontainer besteht aus doppelwandigen, an der Außenseite isolierten Wänden. Der Zwischenraum enthält keine Rohrleitungen, sondern umfaßt lediglich strukturelle Versteifungen und Leitbleche zum Strömen und Speichern von Binäreis. Durch die nicht notwendigen Rohrleitungen ergibt sich ein wesentlich einfacher herstellbarer Aufbau.

Binäreis wird von einer Binäreisfüllstation zur Verfügung gestellt. Eine typische Binäreisfüllstation besteht aus einer Anzahl von Binäreis erzeugenden Maschinen sowie Speichertanks für Binäreis und Reservoiren für Binäreisflüssigkeit. Binäreis wird nun von verschiedenen binäreiserzeugenden Maschinen mit unterschiedlichen Temperaturen erzeugt, die für verschiedene Kühlanwendungen z. B. für Blumen bei + 6 °C, für Molkereiprodukte bei + 1 °C, für frischen Fisch bei - 1 °C, für gefrorenes Fleisch bei - 18 °C oder für Eiscreme bei - 26 °C geeignet sind.

Weitere Vorteile der Erfindung ergeben sich aus nachfolgender Beschreibung eines bevorzugten Ausführungsbeispiels anhand der beigefügten Zeichnung.

Dabei zeigt:

Fig. 1 eine typische Binäreisfüllstation für den Kühltransport, und

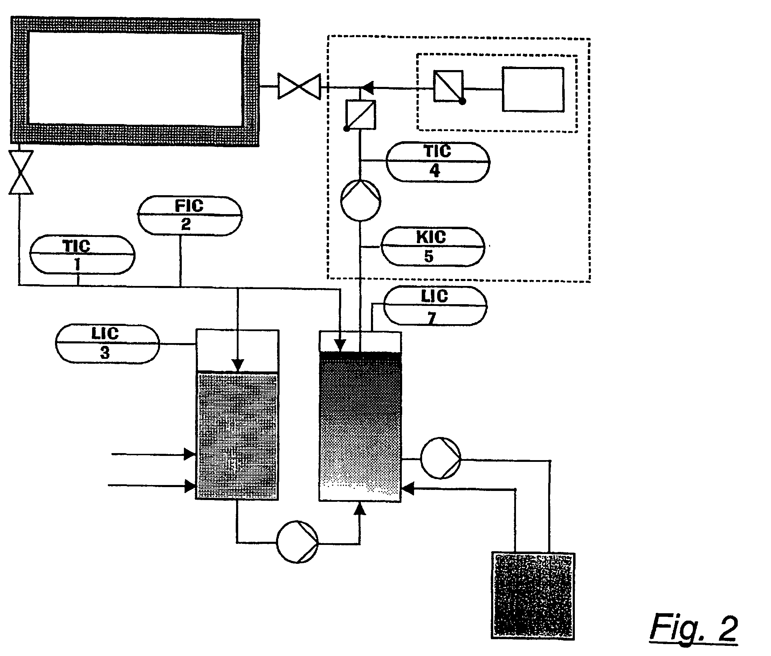

Fig. 2 eine schematische Darstellung der bei der Überwachung des Befüllvorganges vorgenommenen Messungen und Regelung.

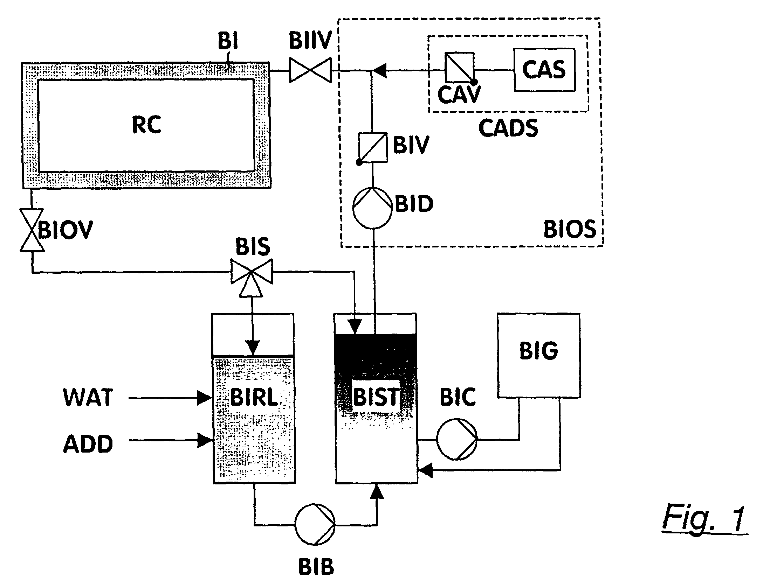

Das in der Fig. 1 dargestellte System besteht aus einem Kühlcontainer RC, der eine BI-gefüllte Wandung aufweist, die über das Binäreiseinlaßventil BIIV und das Binäreisauslaßventil BIOV befüllt bzw. entleert wird. Mit Bezugszeichen BIS ist ein Binäreisventil bezeichnet, das entleertes Binäreis entweder in einen Binäreisflüssigkeitsspeicher BIRL oder einen Binäreisspeicher BIST rückführt. Eine Binäreispumpe BIB fördert Binäreis in den Binäreisspeicher BIST, so daß dort eine gewünschte Eiskonzentration erreicht wird.

Der Binäreisspeicher BIST wird über eine Binäreisladepumpe BIC vom Binäreiserzeuger BIG geladen. Mit gestrichelter Umrandung sind die Bestandteile der Binärbetriebsstation BIOS nämlich eine Binäreisentnahmepumpe BID der ein Rückschlagventil BIV nachgeschaltet ist, dargestellt. Hinter diesem Rückschlagventil befindet sich eine Drucklufteinleitung, die aus dem mit dem Bezugszeichen CADS bezeichneten Druckluftsystem aus einer Druckluftquelle CAS über ein Druckluftventil CAV zur Einbringung von Druckluft dient. Die Druckluft dient zur beschleunigten Entleerung der Doppelwand. Ebenso kann Unterdruck Verwendung finden.

In der Wand eines vorgeschlagenen Kühlcontainers RC würde sich vorteilhafterweise an eine auf der Innenseite aus Edelstahl oder Kunststoff dem Kühlgut zugewandte steife Wandung ein Raum für Binäreis und an der Außenseite eine deutlich dickere, von z.B. zwei Plastikwandungen umgebene Isolierschicht anschliessen.

Geschmolzenes Binäreis wird, wie in der Fig. 1 dargestellt, durch das Binäreisauslaßventil BIOV insbesondere durch Anlegen eines Überdruckes an das Ventil BIIV abgeführt oder in einer alternativen Ausführungsform auch durch Unterdruck z. B. durch eine Unterdruckpumpe aus der RC-Wandung herausgefördert.

Das Binäreis, das durch das Ventil BIOV herausgeführt wird, kann durch das Ventil BIS direkt in den Binäreisspeicher BIST zurückgeführt werden. Dies wird insbesondere dann der Fall sein, wenn das Aufschmelzen des Binäreises in der Wandung endet und das Binäreis mit (fast) konstanter Eiskonzentration zurückgeführt wird. Sobald dann der Kühlcontainer RC gefüllt ist und sich im wesentlichen in der Gleichgewichtstemperatur befindet, wird die Pumpe BID gestoppt, die Ventile BIIV und BIOV geschlossen, sowie der Kühlcontainer RC von der Binäreisstation BIOS getrennt.

Der Container kann nun bewegt werden, wobei zum Ausgleich von Druckschwankungen aufgrund von Ausdehnung/Kontrahierung des Binäreisfluides Druckausgleichsventile als kleine Öffnungen an der Oberseite des Containers vorhanden sind oder geeignete Volumenausgleichgegenstände, wie flexible Schlauchleitungen, benutzt werden.

Nachdem der Kühlcontainer RC entfernt wurde, kann der Binäreiserzeuger BIG Binäreis für einen nächsten Füllvorgang erzeugen. Dabei wird die Binäreisladepumpe BIC Fluid aus dem Tank BIST fördern, das mit Eiskristallen aus dem BIG Eiserzeugungssystem angereichert ist. Die Binäreispumpe BIB wird allmählich Fluid aus dem Binäreisflüssigkeitsspeicher BIRL nachliefern, um das Volumen des Binäreises im Binäreisspeicher BIST zu erhöhen. Der Binäreisspeicher BIST wird innerhalb einer bestimmten Zeitspanne somit wieder aufgefüllt sein.

Sobald der Speicher BIST aufgefüllt ist, wird der Binäreiserzeuger sich abschalten. Dies stellt sicher, daß das binäreisladende System jeweils genügend Vorrat an Binäreis besitzt. Wenn ein leerer Kühlcontainer RC zu beladen ist, wird entsprechend Flüssigkeit in den Speicher BIRL hinzugefügt werden. Da die Temperatur des Binäreises auf der Menge und Art der Gefrierpunkt erniedrigenden Substanz ADD beruht, wird ggf. eine entsprechende Menge der gefrierpunkterniedrigenden Substanz ADD zu z.B. normalem Wasser (WAT) hinzugefügt werden, um die typische Temperatur des gewünschten Binäreises zu erreichen.

Auch beim Füllen eines bereits mit aufgetautem Binäreis angelieferten Containers wird eine kontrollierte Hinzufügung ADD oder lediglich von Wasser stattfinden, um zu jeweils gewünschten Konzentration zu gelangen. Falls dabei zuviel Fluid anfällt, wird vorzugsweise aus dem Binäreisflüssigkeitsspeicher BIRL einiges Fluid zu entfernen sein, wobei dieses ggf. in entsprechende Vorratstanks eingelagert werden kann.

Insgesamt läßt sich die Binäreisfüllanlage BIFIS wie eine Tankstelle betreiben. Die Kälteenergie, die einem Kühlcontainer RC zugeführt werden kann, kann entweder pauschal durch die Menge des Binäreises, die in den Kühlcontainer eingefüllt wird oder durch die thermische Energie des Binäreises festgelegt werden. Hierbei wird am besten ein Überwachungsverfahren benutzt, das aus den folgenden Schritten besteht:

a) Entleeren des Kühlcontainers RC von einer "alten" Binäreisfüllung durch Ablassen des flüssigen Anteils in einen entsprechenden BIRL Binäreisflüssigkeitsspeicher mit einer entsprechenden Konzentration eines gefrierpunktbeeinflussenden Mittels "ADD".

Dieses Volumen kann z. B. durch einen Flüssigkeitsstandsensor LIC 3 erfaßt werden und als sogenannte Ablaßrate DC in m³ ausgedrückt werden.

b) Nachdem die alte Füllung von Binäreis entfernt wurde, wird die Binäreisentnahmepumpe BID in Betrieb gesetzt und aus dem Binäreisspeicher BIST Binäreis einer gewünschten Temperatur dem Kühlcontainer RC zugeführt. Rückgeführtes Binäreis verläßt den Container durch das

Binäreisauslaßventil BIOV. Solange die Rücklauftemperatur am Punkt TIC 1 oberhalb der Temperatur am Punkt TIC 4 des Binäreisspeichers BIST ist, wird sich das Binäreisventil BIS nur in den Binäreisflüssigkeitsspeicher BIRL öffnen. Während dieser Zeitdauer wird der Binäreisfluß am Punkt FIC 2, wie auch die Temperaturdifferenz, TIC 1 - TIC 4 und die Eiskonzentration KIC 5 am Einlaß und Auslaß des Kühlcontainers RC bestimmt. Diese Werte und die zugehörige Zeit entsprechen der sogenannten Abkühlrate (im folgenden DR genannt) in kWh.

c) Wenn einmal die Temperaturen hinter dem Binäreisauslaßventil BIOV am Punkt TIC 1 und des Binäreises am Punkt TIC 4 gleich (oder fast gleich) sind, öffnet das Ventil BIS in den Binäreisspeicher BIST und schließt den Binäreisflüssigkeitsspeicher BIRL ab. Der Kühlcontainer RC wird nun mit frischem Binäreis im Kreislauf betrieben. Die Eiskonzentration wird am Punkt KIC 5 bestimmt und stellt zusammen mit dem Volumen, das aus dem Kühlcontainer RC entnommen wird, die sogenannte Eisbeladung (im folgenden IC genannt) dar, die ebenfalls in kWh angegeben wird. Das Volumen, das vom Kühlcontainer RC aufgenommen wird, wird durch Messen des Flüssigkeitsniveaus im Binäreisspeicher BIST am Punkt LIC 7 und dem Binäreisflüssigkeitsspeicher BIRL am Punkt LIC 3 festgestellt. Die Volumenänderung ist die sogenannte Füllrate (im folgenden FC) genannt, die in m³ dargestellt wird.

d) Die ermittelten Wert lassen sich wie folgt in Gleichungen darstellen:

- die zugeführte Kälteenergie:

$$Q_{RC} = DR + IC \qquad [kWh]$$

- das zugeführte Eisvolumen:

$$V_{Ice} = FC - DC \qquad [m^3]$$

wobei

$$FC = \Delta V_{BIST} + \Delta V_{BIRL}{}^* \qquad [m^3]$$

$$DC = \triangle_{BIRL}{}^{**} \qquad [m^3]$$

* und ** stellen jeweils verschiedene BIRLs dar, wenn die Konzentration an ADD nicht übereinstimmt.

Für Binäreisabgebestellen, an denen Binäreisfluid verschiedener definierter ADD-Konzentrationen anfällt/produziert wird, ist es von Vorteil, diese Flüssigkeiten nicht zu mischen und separate Kreisläufe zu installieren, die beispielsweise durch an den Containern spezifisch vorhandene Kupplungen sich voneinander unterscheiden. Es wird vorgeschlagen, daß diese Kupplungen jeweils in sich auftrennbar sind, und einen (Teil-)-Abschnitt am Kühlcontainer belassen, während dieser gefüllt verbleibt, so daß beim Entleeren zu diesem signifikanten belassen Stück eine Verbindung herzustellen ist, die nur mit passgenauen Stücken erreicht werden kann, die die Entleerung in den entsprechend richtigen Binäreisflüssigkeitsspeicher BIRL sicherstellen.

Um eine gleichförmige Temperaturverteilung innerhalb der Wand zu erreichen, werden Strukturen vorgeschlagen, die innerhalb Binäreis enthaltenen Wandung das Binäreis daran hindern aufzuschwimmen (das spezifische Gewicht von Binäreis ist üblicherweise geringer, als das der geschmolzenen Flüssigkeit). Ansonsten würde das Binäreis sich nach einiger Zeit im oberen Bereich eines zur Verfügung stehenden Innenraums einer Wandung sammeln.

## Patentansprüche

1. Verfahren zum gekühlten Transport in einen hohlwandigen Kühlcontainer (RC) eingebrachten Gutes, mit folgenden Schritten :

   - Vorhalten einer pumpbaren Suspension winziger Eiskristalle, sog. Binäreis, einer vorbestimmten Zusammensetzung und Temperatur in einem Binäreisspeicher (BIST) bis zur Verwendung zum Kühlen und Befüllen,

   - Entleeren der ggf. befüllten Wandung eines zu benutzenden Kühlcontainers (RC) über ein Binäreisauslassventil (BIOV),

   - Einfüllen des vorgehaltenen Binäreises in die entleerte Wandung des Kühlcontainers (RC),

   - Zirkulierenlassen des Binäreises im Kühlcontainer (RC), über Befüllarmaturen, die vom Binäreispeicher (BIST) versorgt werden, bis die Temperatur der Wandung auf eine vorbestimmte Temperatur abgesenkt ist, wobei aus dem Auslassventil (BIOV) austretendes erwärmtes Fluid einem Binäreisflüssigkeitsspeicher (BIRL) zugeführt wird,

   - Auffüllen der Wandung des Kühlcontainers (RC) mit Binäreis bis zu einem vorbestimmten Niveau,

   - Abkoppeln des Kühlcontainers (RC) von den Befüllarmaturen,

   - Rückführen des beim Abschmelzen des Binäreises sich ergebenden Binäreisfluides in einen entsprechenden Binäreisflüssigkeitsspeicher (BIRL) zur erneuten Erzeugung von Binäreis aus dem Binäreisfluid.

2. Verfahren nach Anspruch 1, **dadurch gekennzeichnet, daß** das Entleeren des Binäreisfluides mit Hilfe von Druckluft erfolgt.

3. Verfahren nach Anspruch 1, **dadurch gekennzeichnet, daß** das Entleeren des Binäreisfluides mit Hilfe von Unterdruck erfolgt.

4. Verfahren nach einem der vorangehenden Ansprüche, **dadurch gekennzeichnet, daß** ein standardisierter Druckluft (CAS)-Anschluß und eine Mehrzahl von spezifischen Binäreiskupplungen (BIIV, BIOV) für verschiedene Binäreiszusammensetzungen und Temperaturen an Befüllstationen für die jeweils eingesetzten Kühlcontainer (RC) verwendet werden.

## Claims

1. Method for refrigerated transportation of a product introduced into a hollow-walled refrigerated container (RC) with the following steps:

   - keeping a pumpable suspension of minute ice crystals, so-called binary ice, having a predetermined composition and temperature in a binary ice reservoir (BIST) up to the use thereof for cooling and filling,

   - emptying the optionally filled wall of a refrigerated container (RC) to be used by means of the binary ice outlet valve (BIOV),

   - filling the kept binary ice into the emptied wall of the refrigerated container (RC),

   - allowing the binary ice to circulate in the refrigerated container (RC) by means of filling valves, which are supplied by the binary ice reservoir (BIST) until the wall temperature has dropped to a predetermined level and heated fluid passing out of the outlet valve (BIOV) is supplied to a binary ice liquid reservoir (BIRL)

- filling the wall of the refrigerated container (RC) with binary ice up to a predetermined level,

- decoupling the refrigerated container (RC) from the filling valves,

- returning the binary ice fluid occurring on melting the binary ice into a corresponding binary ice liquid reservoir (BIRL) for further production of binary ice from the binary ice fluid.

2. Method according to claim 1 **characterized in that** the binary ice fluid is emptied with the aid of compressed air.

3. Method according to claim 1, **characterized in that** the binary ice fluid is emptied with the aid of vacuum.

4. Method according to one of the preceding claims, **characterized in that** use is made of a standardized compressed air (CAS) connection and a plurality of specific binary ice couplings (BIIV, BIOV) for different binary ice compositions and temperatures at filling stations for the particular refrigerated container (RC) is used.

**Revendications**

1. Procédé pour le transport frigorifique d'une marchandise placée dans un conteneur frigorifique (RC) à paroi creuse, comprenant les étapes suivantes:

- La mise en réserve d'une suspension de minuscules cristaux de glace, appelée glace binaire, susceptible d'être pompée, d'une composition et d'une température prédéterminées, dans un réservoir à glace binaire (BIST), jusqu'à son utilisation pour le refroidissement et le remplissage,

- le vidage de la paroi, éventuellement remplie, d'un conteneur frigorifique (RC) destiné à être utilisé, au moyen d'une soupape de sortie de glace binaire (BIOV),

- l'introduction de la glace binaire mise en réserve dans la paroi vidée du conteneur frigorifique (RC),

- la mise en circulation de la glace binaire dans le conteneur frigorifique (RC) par l'intermédiaire de robinets de remplissage alimentés par le réservoir à glace binaire (BIST) jusqu'à ce que la température de la paroi baisse pour atteindre une valeur prédéterminée ; le fluide réchauffé sortant de la soupape de sortie (BIOV) étant conduit à un réservoir à liquide de glace binaire (BIRL),

- le remplissage de la paroi du conteneur frigorifique (RC) avec de la glace binaire jusqu'à un niveau prédéterminé,

- le découplage du conteneur frigorifique (RC) des robinets de remplissage,

- le renvoi du liquide de glace binaire résultant de la fonte de la glace binaire dans un réservoir à liquide de glace binaire (BIRL) correspondant, afin de produire de la nouvelle glace binaire à partir dudit liquide de glace binaire.

2. Procédé selon la revendication 1, **caractérisé en ce que** le vidage du fluide de glace binaire est effectué au moyen d'air comprimée.

3. Procédé selon la revendication 1, **caractérisé en ce que** le vidage du fluide de glace binaire est effectué au moyen d'une dépression.

4. Procédé selon une des revendications précédentes, **caractérisé en ce qu'**une connexion standardisée d'air comprimée (CAS) et une pluralité de couplages spécifiques de glace binaire (BIIV, BIOV) sont utilisés aux stations de remplissage pour différentes compositions de glace binaire et différentes températures pour les conteneurs frigorifiques utilisés à chaque fois.

Fig. 1

EP 1 114 288 B1

*Fig. 2*

EP 1 114 288 B1